# EUROPEAN PATENT SPECIFICATION

(11) **EP 2 418 904 B1**
(45) Date of publication and mention of the grant of the patent: **25.06.2014**
(21) Application number: 10761210.3
(22) Date of filing: 12.04.2010
(51) Int. Cl.: H04L 5/00

(54) **Method and apparatus for triggering scheduling information reporting in multi-carrier system**
Verfahren und Vorrichtung zur Auslösung von Koordinationsinformationsberichten in einem Mehrträgersystem
Procédé et appareil de déclenchement de rapport d'informations de planification dans un système multiporteuse

(30) Priority: 10.04.2009 CN 200910081805; 07.08.2009 CN 200910165383
(43) Date of publication of application: 15.02.2012
(73) Proprietor: China Academy of Telecommunications Technology, Haidian District Beijing 100191 (CN)
(72) Inventor: QI, Liang, Beijing 100083 (CN); XU, Fangli, Beijing 100083 (CN); YAN, Gao, Beijing 100083 (CN)
(74) Representative: Isarpatent
(86) International application number: PCT/CN2010/071701
(87) International publication number: WO 2010/115381

(56) References cited:
- WO-A1-2007/148927
- CN-A- 101 141 779
- CN-A- 101 340 605
- "3rd Generation Partnership Project; Technical Specification Group Radio Access Network; Medium Access Control (MAC) protocol specification (Release 8)", 3GPP STANDARD; 3GPP TS 25.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.5.0, 1 March 2009 (2009-03-01), pages 1-180, XP050367725,

## Description

### Field of the Invention

The present invention relates to mobile communication technologies, and more particularly to a method and apparatus for triggering a scheduling information report in a multi-carrier system.

### Background of the Invention

In 3GPP Release 7 communication standard of year 2007, an N frequency point characteristic is introduced to a High Speed Uplink Packet Access (HSUPA) system, that is, in the HSUPA system, one cell has multiple frequency points, one is a main frequency point, and the others are auxiliary frequency points. Currently, in the HSUPA system with the N frequency point characteristic, User Equipment (UE) works in a single carrier mode, and a work frequency point of the UE may be the main frequency point or auxiliary frequency point of the cell in which the UE is located.

Because of the introduced N frequency point characteristic, user capability of the HSUPA system is greatly improved. Meanwhile, the UE can use the carrier at multiple frequency points, which provides basis for introducing multi-carrier characteristic in the HSUPA system. If the multi-carrier characteristic is introduced in the HSUPA system, uplink peak rate of the user will be increased to be close to downlink peak rate. Therefore, it can be forecasted that the multi-carrier characteristic of the HSUPA system will be introduced in the 3GPP standard soon.

Compared with the HSUPA system of the single carrier, if the multi-carrier characteristic is introduced in the HSUPA system, many problems related to the multi-carrier are brought, such as how to trigger a SI report. Network side assigns resources to the UE according to the SI reported by the UE.

In the conventional HSUPA system of the signal carrier, there are 6 triggering conditions in the SI report, and the SI report will be triggered when one of the triggering conditions is met. The 6 conditions respectively are:
condition 1: a Radio Link Control (RLC) buffer of the UE changes from 0 to a value larger than 0, in other words, the UE has data to be sent currently while there is no data to be sent before;
condition 2: the UE is in a switch procedure, and the RLC buffer is not null;
condition 3: a wait timer (T-WAIT) expires; when a scheduling grant obtained by the UE expires and the buffer is not null, the UE starts the T-WAIT; if the UE obtains the scheduling grant again when the T-WAIT is running, the T-WAIT is restarted when the UE obtains the scheduling grant again. The T-WAIT is used to avoid that the UE is not scheduled for a long time;
   If the SI report is triggered by the condition 3, an Enhanced Dedicated Channel (E-DCH) Random access Uplink Control Channel (E-RUCCH) is used to report the SI;
condition 4: a SI report timer (T-SI) expires; every time the UE reports the SI through a Media Access Control layer Protocol Data Unit on E-DCH (MAC-e PDU or MAC-i PDU), the T-SI is started or restarted; the T-SI is used to make the UE report the SI in time;
   If the SI report is triggered by the condition 4, the MAC-e PDU or MAC-i PDU is used to report the SI;
condition 5: besides logic channel data, if the SI can be filled in remained space of a Transport Block Size (TBS) selected by an E-DCH Transport Format Combination (E-TFC) of the UE, the SI report is triggered, and the SI is reported through the MAC-e PDU or MAC-i PDU corresponding to the TBS;
condition 6: if logic channel data with a priority higher than a priority of logic channel data currently stored by the UE comes into the RLC buffer of the UE, the SI report is triggered, and the UE reports the SI through the MAC-e PDU or MAC-i PDU.

Conditions 1 and 2 relate to a grant request triggering, conditions 3 and 4 relates to a timer triggering, condition 5 relates to a padding triggering and condition 6 relates to higher priority data triggering.

Whether conditions 1, 2 and 5 are met depend on parameters of the UE, specifically, the condition 1 depends on the buffer state of the UE, the condition 2 depends on the switch state and buffer state of the UE, the condition 5 depends on the padding state of the TBS. Whether condition 3, 4, and 6 are met depend on state of the carrier of the UE, specifically, the condition 3 corresponds to the scheduling grant state of the carrier of the UE, the condition 4 corresponds to the state of sending the MAC-e PDU or MAC-i PDU by the carrier of the UE, and condition 6 corresponds to state of the priority of the logic channel data newly received by the carrier of the UE.

In communication systems of the single carrier, whether condition 3, 4, and 6 are met depend on the state of the carrier currently used by the UE. If the multi-carrier characteristic is introduced in a mobile communication system, the number of the carriers assigned to the UE by the network side changes from one to multiple, accordingly, the UE has multiple carrier states. Therefore, when there are multiple different carrier states, how to trigger the SI report is a problem must be solved when the multi-carrier characteristic is introduced in the 3GPP standard. In the multi-carrier system, the network side needs to assign resources to each carriers of the UE according to the SI reported by the UE, and the resources assigned to the carriers may be the same or different.

Currently, the multi-carrier characteristic is not introduced in the 3GPP standard, and there is no solution corresponds to how to trigger the SI report in the multi-carrier communication system.

CN 101340605 A discloses a method for report SI in a HSUPA system. In the method, SI information is divided into long SI and short SI; the length obtained by subtracting the length of data part and the length of group head part from the length of enhanced media access control protocol data unit is determined, and the long SI or the short SI is added into enhanced media access control protocol data unit.

"3rd Generation Partnership Project; Technical Specification Group Radio Access Network; Medium Access Control (MAC) protocol specification (Release 8)" discloses the continuing work within the TSG and specifies the MAC protocol. The specification describes: MAC architecture; MAC entities; channel structure and etc.

### Summary of the Invention

Embodiments of the present invention provide a method for triggering SI report in a multi-carrier system so that the UE can trigger the SI report in the multi-carrier system.

Embodiments of the present invention are implemented as follows.

A method for triggering SI report in a multi-carrier system includes:
configuring a timer in User Equipment (UE) corresponding to all carriers assigned to the UE, when a state of one of the carriers meets a preconfigured condition, starting or restarting the timer, if the timer expires, triggering a SI report; wherein
the timer comprises a wait timer, T-WAIT;
when the state of one of the carriers meets the preconfigured condition, starting or restarting the timer comprises:
   if a scheduling grant currently obtained by the one of the carriers expires, starting or restarting the T-WAIT; and if the one of the carriers of the UE obtains the scheduling grant when the T-WAIT is running, stopping and/or resetting the T-WAIT.

An apparatus for triggering SI report in a multi-carrier system includes: a SI report triggering module and one timing module, wherein
the timing module corresponds to all carriers assigned to the apparatus, when a state of one of the carriers meets a preconfigured condition, the timing module is adapted to start or restart timing, if the timing module expires, the timing module is adapted to send a triggering instruction to the SI report triggering module;
the SI report triggering module is adapted to receive the trigging instruction, and trigger a SI report; and
the timing module comprises a T-WAIT,
if a scheduling grant currently obtained by the one of the carriers expires, the T-WAIT is adapted to start or restart timing; and if the one of the carriers obtains the scheduling grant when the T-WAIT is running, the T-WAIT is adapted to stop running and/or is adapted to be reset.

As can be seen from the above solutions, in the embodiments of the present invention, a timer is configured for each carrier assigned to the UE by the network side, or a timer is configured for all carriers assigned to the UE by the network side, the timer is start or restart according to a preconfigured condition, if the timer expires, the SI report is triggered. In the embodiments of the present invention, how to trigger the SI report according to carrier states when there are multiple different carrier states is defined in the case that each timer is maintained for each carrier or one timer is maintained for all the carriers. Specifically, if each timer is maintained for each carrier, the SI report is triggered independently according to the state of each carrier; if one timer is maintained for all the carriers, the SI report is triggered when any one of the carriers assigned to the UE by network side meets a preconfigured condition.

If the UE triggers the SI report independently according to the state of each carrier, i.e. each first timer is maintained for each carrier, the SI report is triggered when the first timer expires, and thus the SI is reported in time, which is good for the communication system to schedule each UE and assign recourses to each carrier of the UE.

If the SI report is triggered when any one of the carriers assigned to the UE by the network side meets a preconfigured condition, i.e. the second timer is maintained, the SI report is triggered when the second timer expires, if the second timer is the T-WAIT, the using frequency of the E-RUCCH is reduced, collision probability of using the E-RUCCH channel by the UE is reduced, and success rate of enhanced random access of the UE is improved; if the second timer is the T-SI, the MAC-e PDU or MAC-i PDU may be used to carry all SI respectively maintained by each carrier or carry the SI maintained by all carriers, and thus it is unnecessary to trigger the SI report according the state of each carrier, and the system resources are saved. In the present invention, how to maintain the SI respectively by each carrier or how to maintain the SI by all the carriers is not discussed.

In addition, if the SI report is triggered by maintaining the second timer, data transmitted when reporting the SI is reduced and thus the system resources are saved. Specifically, some resource information in the SI of different carriers of each UE is the same, such as the RLC storage space, and some resource information in the SI of different carriers is different, such as UE Power Headroom, (UPH), and usually the same resource information changes fast while the different resource information changes slowly, and thus if the SI report is triggered by maintaining the second timer, every time the SI is reported, no matter that the SI corresponds to different carrier, the same resource information is carried, and thus fast update of the same resource information is ensured, and the data transmission quantity is reduced compared with that the first timer is maintained for trigger the SI report.

### Brief Description of the Drawings

Figure 1 is a flowchart illustrating a method for triggering a SI report when each carrier in a UE side independently maintains a T-WAIT respectively.
Figure 2 is a flowchart illustrating a method for triggering a SI report when each carrier independently maintains a T-SI respectively.
Figure 3 is a flowchart illustrating a method for triggering a SI report when carriers maintain a T-WAIT.
Figure 4 is a flowchart illustrating a method for triggering a SI report when carriers maintain a T-SI.
Figure 5 is a schematic diagram illustrating a first structure of an apparatus for triggering a SI report in a multi-carrier system according to an embodiment of the present invention.
Figure 6 is a schematic diagram illustrating a second structure of an apparatus for triggering a SI report in a multi-carrier system according to an embodiment of the present invention.
Figure 7 is a schematic diagram illustrating a third structure of an apparatus for triggering a SI report in a multi-carrier system according to an embodiment of the present invention.

### Detailed Description of the Invention

In order to make the object, technical solution and merits of the present invention clearer, the present invention will be illustrated in detail hereinafter with reference to the accompanying drawings and embodiments.

In the embodiments of the present invention, when there are multiple different carriers in the user side, how to trigger the SI report according to carrier states is defined. Specifically, the SI report may be independently triggered respectively according to the state of each carrier assigned to the UE by the network side ("the carrier assigned to the UE by the network side" is called as "the configured carrier of the UE" for short hereinafter), or the SI report may be triggered when the states of all the carriers meet a preconfigured condition. In the embodiments of the present invention, the state of the carrier is monitored by using a timer, if the SI report is independently triggered respectively according to the state of each carriers, a first timer is configured for each configured carrier of the UE to monitor the state of the configured carrier; if the SI report is triggered when the states of all the carriers meet a preconfigured condition, a second timer is configured for all the configured carriers of the UE to monitor the states of the carriers.

The first timer may be the T-WAIT or T-SI, the second timer may also be the T-WAIT or T-SI, and the embodiments of the present invention may be described in detail hereinafter.

The SI triggered by the T-SI is carried by the MAC PDU. Specifically, the SI may be carried by the MAC-e PDU or MAC-i PDU. The MAC-i PDU is enhanced from the MAC-e PDU and is only used as the MAC PDU that carries the SI in the present invention. In the future evolution system, other MAC PDU may be evolved from the MAC-e PDU or MAC-i PDU, when the embodiments of the present invention are applied in the future evolution system, the other MAC PDU may be used to carry the SI. The procedures of carrying the SI by different MAC PDUs do not have essential difference, and thus in the following embodiments, the MAC-e PDU is taken as an example.

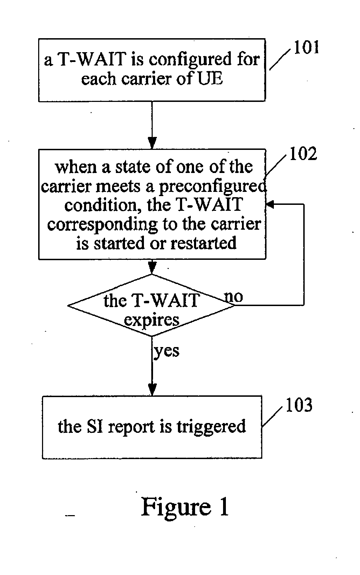

Figure 1 is a flowchart illustrating a method for triggering a SI report when each carrier in a UE side independently maintains a T-WAIT respectively. As shown in Figure 1, the method includes the following processes.

Step 101, a T-WAIT is configured for each configured carrier of UE respectively.

Step 102, when a state of one of the configured carrier meets a preconfigured condition, the T-WAIT corresponding to the configured carrier is started or restarted, if the T-WAIT expires, step 103 is performed, otherwise, step 102 is returned.

In this step, if a scheduling grant currently obtained by the carrier corresponding to the T-WAIT expires, the T-WAIT is started or restarted; and if the carrier corresponding to the T-WAIT obtains the scheduling grant again when the T-WAIT is running, the T-WAIT stops running or/and is reset.

Step 103, the SI report is triggered.

In this step, the SI is reported via an enhanced random access procedure initiated on E-RUCCH resources of the carrier corresponding to the expired T-WAIT.

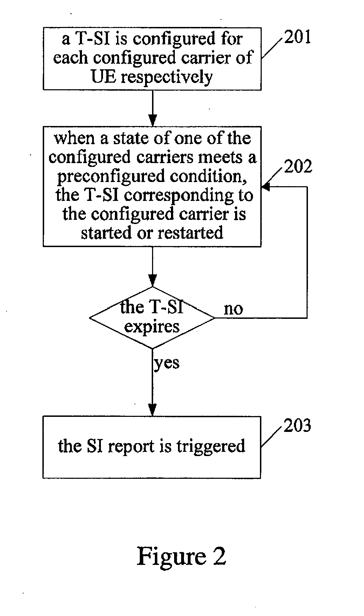

Figure 2 is a flowchart illustrating a method for triggering a SI report when each carrier independently maintains a T-SI respectively. As shown in Figure 2, the method includes the following processes.

Step 201, a T-SI is configured for each configured carrier of UE respectively.

Step 202, when a state of one of the configured carrier meets a preconfigured condition, the T-SI corresponding to the configured carrier is started or restarted, if the T-SI expires, step 203 is performed, otherwise, step 202 is returned.

In this step, the T-SI is started or restarted every time after the SI is reported via the MAC-e PDU by the carrier corresponding to the T-SI.

Step 203, the SI report is triggered.

In this step, the SI is reported through the MAC-e PDU of the carrier corresponding to the expired T-SI.

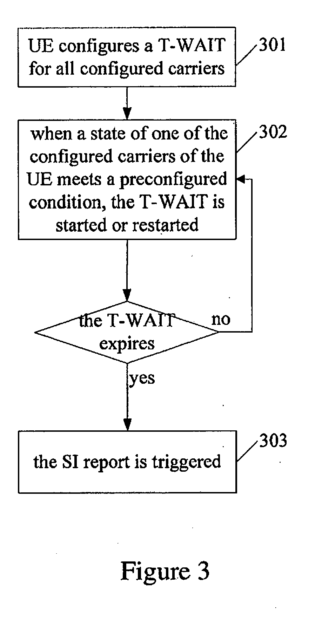

Figure 3 is a flowchart illustrating a method for triggering a SI report when carriers maintain a T-WAIT. As shown in Figure 3, the method includes the following processes.

Step 301, UE configures one T-WAIT for all configured carriers of the UE.

Step 302, when a state of one of the configured carriers of the UE meets a preconfigured condition, the T-WAIT is started or restarted, if the T-WAIT expires, step 303 is performed, otherwise, step 302 is returned.

In this step, if a scheduling grant currently obtained by one of all the carriers expires, the T-WAIT is started or restarted; and if one of all the carriers obtains the scheduling grant when the T-WAIT is running, the T-WAIT stops running or/and is reset.

Step 303, the SI report is triggered.

In this step, the SI is reported via an enhanced random access procedure initiated on E-RUCCH resources configured for the UE by the network side after the T-WAIT expires at step 302.

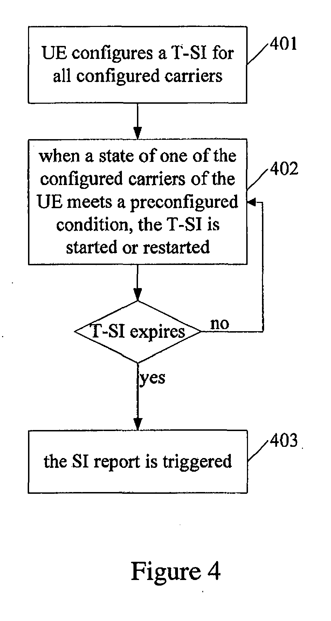

Figure 4 is a flowchart illustrating a method for triggering a SI report when carriers maintain a T-SI. As shown in Figure 4, the method includes the following processes.

Step 401, UE configures one T-SI for all configured carriers of the UE.

Step 402, when a state of one of the configured carriers of the UE meets a preconfigured condition, the T-SI is started or restarted, if the T-SI expires, step 403 is performed, otherwise, step 402 is returned.

In this step, the T-SI is started or restarted every time after the SI is reported via the MAC-e PDU by one of the carriers, and the T-SI starts running until the T-SI expires or is started or restarted again.

Step 403, the SI report is triggered.

In this step, the SI is reported by the carrier firstly obtaining the scheduling grant after the T-SI expires at step 402, so that the SI is reported in time.

Figures 1 to 4 provide the specific methods in which the T-WAIT or T-SI is maintained for each configured carrier of the UE or for all the configured carriers of the UE, in practical applications, the T-WAIT and the T-SI work independently and do not affect each other, and thus in the same multi-carrier mobile communication system, the UE may maintain the T-WAIT and T-SI for each configured carrier independently, or maintain the T-WAIT and T-SI for all the configured carriers, or maintain the T-WAIT for each configured carrier independently and maintain the T-SI for all the configured carriers, or maintain the T-SI for each configured carrier independently and maintain the T-WAIT for all the configured carriers. For any one of the above methods, modules may be configured in an apparatus to trigger the SI report according to any one of the above methods.

Besides the SI report triggered according to the state of each carrier, the SI report may also be triggered according to priority state of logic channel data newly received by the UE. Specifically, if the logic channel data with a priority higher than a priority of logic channel data currently stored by the UE is received by the UE, the SI is reported by the UE via a carrier firstly obtaining a scheduling grant after receiving the logic channel data with the higher priority.

The embodiments of the present invention are applicable to mobile communication systems in which there are multiple carriers and the UE needs to report the SI information to the network side, for example, multi-carrier HSUPA systems, HSPA subsequence evolution systems.

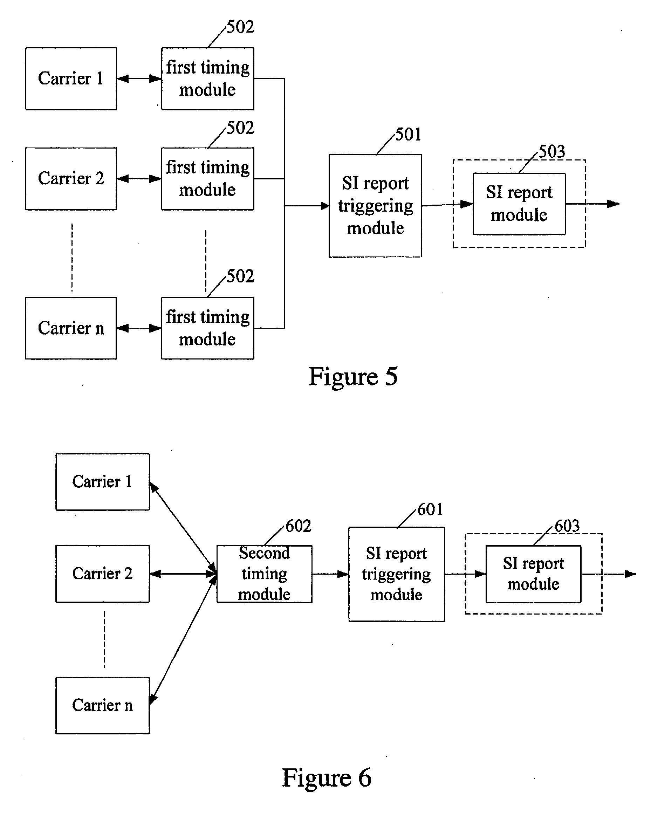

Figure 5 is a schematic diagram illustrating a first structure of an apparatus for triggering a SI report in a multi-carrier system according to an embodiment of the present invention. As shown in Figure 5, the apparatus includes a SI report triggering module 501 and at least two first timing modules 502.

Each first timing module 502 corresponds to one carrier assigned to the apparatus by network side, when a state of the carrier meets a preconfigured condition, the first timing module 502 is started or restarted, if the first timing module 502 expires, a triggering instruction is send to the SI report triggering module 501.

The SI report triggering module 501 is adapted to receive the trigging instruction, and trigger a SI report.

If the first timing module 502 is a T-WAIT,
if a scheduling grant currently obtained by the carrier corresponding to the T-WAIT expires, the T-WAIT is started or restarted; and, if the carrier corresponding to the T-WAIT obtains the scheduling grant when the T-WAIT is running, the T-WAIT stops running or/and is reset.

The apparatus further includes a SI report module 503.

The SI report module 503 is adapted to, according to the triggering of SI report triggering module 501, report the SI via an enhanced random access procedure initiated on E-RUCCH resources of the carrier corresponding to the expired T-WAIT.

If the first timing module 502 is a T-SI,
the T-SI is started or restarted every time after the carrier corresponding to the T-SI reports the SI via the MAC-e PDU; The SI report module 503 is adapted to, according to the triggering of SI report triggering module 501, report the SI via a new MAC-e PDU of the carrier corresponding to the expired T-SI.
Figure 6 is a schematic diagram illustrating a second structure of an apparatus for triggering a SI report in a multi-carrier system according to an embodiment of the present invention. As shown in Figure 6, the apparatus includes a SI report triggering module 601 and one second timing module 602.

The second timing module 602 corresponds to all carriers assigned to the apparatus by network side, when a state of any one of the carriers meets a preconfigured condition, the second timing module 602 is started or restarted, if the second timing module 602 expires, a triggering instruction is send to the SI report triggering module 601.

The SI report triggering module 601 is adapted to receive the trigging instruction, and trigger a SI report.

If the second timing module 602 is a T-WAIT,
if a scheduling grant currently obtained by one of the carriers expires, the T-WAIT is started or restarted; and if one of the carriers obtains the scheduling grant when the T-WAIT is running, the T-WAIT stops running or/and is reset.

The apparatus shown in Figure 6 further includes a SI report module 603.

The SI report module 603 is adapted to, according to the triggering of SI report triggering module 601, report the SI via an enhanced random access procedure initiated on E-RUCCH resources corresponding to the carrier firstly obtaining the scheduling grant after the T-WAIT expires.

If the second timing module 602 is a T-SI,
the T-SI is started or restarted every time after any one of the carriers reports the SI via the MAC-e PDU; The SI report module 603 is adapted to, according to the triggering of the SI report triggering module 601, report the SI via a new MAC-e PDU of the carrier firstly obtaining the scheduling grant after the T-SI expired.

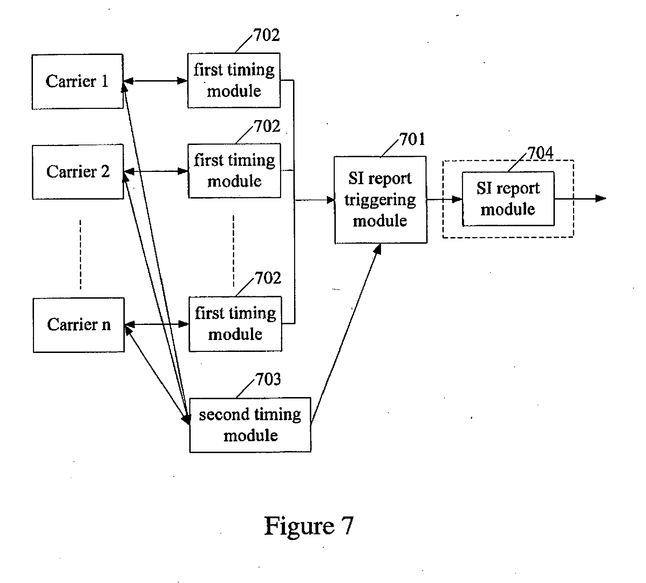

Figure 7 is a schematic diagram illustrating a third structure of an apparatus for triggering a SI report in a multi-carrier system according to an embodiment of the present invention. As shown in Figure 7, the apparatus includes a SI report triggering module 701, at least two first timing modules 702 and one second timing module 702.

Each first timing module 702 corresponds to one carrier assigned to the apparatus by network side, when a state of the carrier meets a preconfigured condition, the first timing module 702 is started or restarted, if the first timing module 702 expires, a triggering instruction is send to the SI report triggering module 701.

The second timing module 703 corresponds to all carriers assigned to the apparatus by the network side, when a state of any one of the carriers meets a preconfigured condition, the second timing module 703 is started or restarted, if the second timing module 703 expires, a triggering instruction is send to the SI report triggering module 701.

The SI report triggering module 701 is adapted to receive the trigging instruction, and trigger a SI report.

If the first timing module 702 is a T-WAIT,
if a scheduling grant currently obtained by the carrier corresponding to the T-WAIT expires, the T-WAIT is started or restarted; and if the carrier corresponding to the T-WAIT obtains the scheduling grant when the T-WAIT is running, the T-WAIT stops running or/and is reset.

The apparatus further includes a SI report module 704.
the SI report module 704 is adapted to, according to the triggering of SI report triggering module 701, report the SI via an enhanced random access procedure initiated on E-RUCCH resources of the carrier corresponding to the expired T-WAIT.

If the first timing module 702 is a T-SI,
the T-SI is started or restarted every time after the carrier corresponding to the T-SI reports the SI via the MAC-e PDU; The SI report module 704 is adapted to, according to the triggering of SI report triggering module 701, report the SI via a new MAC-e PDU of the carrier corresponding to the expired T-SI.

If the second timing module 703 is a T-WAIT,
if a scheduling grant currently obtained by one of the carriers expires, the T-WAIT is started or restarted; and if one of the carriers obtains the scheduling grant when the T-WAIT is running, the T-WAIT stops running or/and is reset.

The SI report module 704 is adapted to, according to the triggering of SI report triggering module 701, report the SI via an enhanced random access procedure initiated on E-RUCCH resources corresponding to the carrier firstly obtaining the scheduling grant after the T-WAIT expires

If the second timing module 702 is a T-SI,

The T-SI is started or restarted every time after any one carrier of the carriers reports the SI via the MAC-e PDU; The SI report module 704 is adapted to, according to the triggering of SI report triggering module 701, report the SI via a new MAC-e PDU of the carrier firstly obtaining the scheduling grant after the T-SI expired.

The foregoing are only preferred embodiments of the present invention and are not for use in limiting the protection scope of the present invention. Any modification, equivalent replacement and improvement made within the scope of the present invention should be covered under the protection scope of the present invention.

## Claims

1. A method for triggering a scheduling information, SI report in a multi-carrier system, comprising:
configuring (301, 401) a timer in User Equipment, UE corresponding to all carriers assigned to the UE, when a state of one of the carriers meets a preconfigured condition, starting or restarting (302, 402) the timer, if the timer expires, triggering (303, 403) a SI report; and
**characterized in that** the timer comprises a wait timer, T-WAIT;
when the state of one of the carriers meets the preconfigured condition, starting or restarting the timer comprises:
if a scheduling grant currently obtained by the one of the carriers expires, starting or restarting the T-WAIT; and if the one of the carriers of the UE obtains the scheduling grant when the T-WAIT is running, stopping and/or resetting the T-WAIT.

2. The method of claim 1, wherein triggering a SI report comprises:
reporting the SI via an enhanced random access procedure initiated on E-RUCCH resources configured for the UE after the T-WAIT expires.

3. The method of claim 1, wherein the timer further comprises a SI report timer, T-SI;
when the state of one of the carriers meets the preconfigured condition, starting or restarting the timer comprises:
starting or restarting the T-SI after the one of the carriers reports the SI through a MAC PDU.

4. The method of claim 3, wherein the MAC PDU comprises a MAC-e PDU or a MAC-i PDU.

5. The method of claim 4, wherein triggering a SI report comprises:
reporting, by the UE, the SI via the MAC PDU of a carrier firstly obtaining a scheduling grant after the T-SI expires.

6. The method of claim 1, further comprising:
if logic channel data with a priority higher than a priority of logic channel data currently stored by the UE is received by the UE, reporting, by the UE, the SI via a carrier firstly obtaining a scheduling grant after receiving the logic channel data with the higher priority.

7. An apparatus for triggering a scheduling information, SI report in a multi-carrier system, comprising: a SI report triggering module (601) and one timing module (602), wherein
the timing module (602) corresponds to all carriers assigned to the apparatus, when a state of one of the carriers meets a preconfigured condition, the timing module is adapted to start or restart timing, if the timing module expires, the timing module is adapted to send a triggering instruction to the SI report triggering module;
the SI report triggering module (601) is adapted to receive the trigging instruction, and trigger a SI report; and
**characterized in that**
the timing module (602) comprises a T-WAIT,
if a scheduling grant currently obtained by the one of the carriers expires, the T-WAIT is adapted to start or restart timing; and if the one of the carriers obtains the scheduling grant when the T-WAIT is running, the T-WAIT is adapted to stop running and/or is adapted to be reset.

8. The apparatus of claim 7, further comprising a SI report module (603);
wherein
the SI report module (603) is adapted to, according to the triggering of SI report triggering module, report the SI via an enhanced random access procedure initiated on E-RUCCH resources configured for the UE after the T-WAIT expires.

9. The apparatus of claim 7, wherein the timing module (602) further comprises a T-SI,
the T-SI is adapted to start or restart timing after the one of the carriers reports the SI through a MAC PDU.

10. The apparatus of claim 9, wherein the MAC PDU comprises a MAC-e PDU or a MAC-i PDU.

11. The apparatus of claim 9, further comprising a SI report module (603);
wherein
the SI report module (603) is adapted to, according to the triggering of SI report triggering module, report the SI via the MAC PDU of a carrier firstly obtaining a scheduling grant after the T-SI expired.

## Patentansprüche

1. Verfahren zum Auslösen eines Disponierungsinformations, DI-Berichts in einem Mehrträgersystem, das Folgendes umfasst:
Konfigurieren (301, 401) eines Timers in einer Nutzerausrüstung, NA entsprechend allen Trägern, die der NA zugewiesen sind, wenn ein Zustand eines der Träger einen zuvor konfigurierten Zustand erfüllt, Starten oder
Neustarten (302, 402) des Timers, wenn der Timer abläuft,
Auslösen (303, 403) eines DI-Berichts; und
**dadurch gekennzeichnet, dass** der Timer einen Warte-Timer, T-WAIT, umfasst;
wenn der Zustand eines der Träger den zuvor konfigurierten Zustand erfüllt, umfasst das Starten oder Neustarten des Timer:
wenn eine Disponierungszusage, die momentan durch den einen der Träger erhalten wurde, abläuft, Starten oder
Neustarten des T-WAIT; und wenn der eine der Träger der NA die Disponierungszusage erhält, wenn der T-WAIT läuft, Anhalten und/oder Zurücksetzen des T-WAIT.

2. Verfahren nach Anspruch 1, wobei das Auslösen eines DI-Berichts Folgendes umfasst:
Berichten der DI über ein Enhanced Random Access-Verfahren, das auf E-RUCCH-Ressourcen initiiert wurde, die für das NA konfiguriert wurden, nachdem der T-WAIT abgelaufen ist.

3. Verfahren nach Anspruch 1, wobei der Timer des Weiteren einen DI-Berichts-Timer, T-DI, umfasst;
wenn der Zustand eines der Träger den zuvor konfigurierten Zustand erfüllt, das Starten oder Neustarten des Timers umfasst:
Starten oder Neustarten des T-DI, nachdem der eine der Träger die DI durch eine MAC-PDU berichtet hat.

4. Verfahren nach Anspruch 3, wobei die MAC-PDU eine MAC-e-PDU oder eine MAC-i-PDU umfasst.

5. Verfahren nach Anspruch 4, wobei das Auslösen eines DI-Berichts Folgendes umfasst:
Berichten, durch die NA, der DI über die MAC-PDU eines Trägers, der zuerst eine Disponierungszusage erhält, nachdem der T-DI abgelaufen ist.

6. Verfahren nach Anspruch 1, das des Weiteren Folgendes umfasst:
wenn Logische-Kanal-Daten mit einer Priorität, die höher ist als eine Priorität von Logische-Kanal-Daten, die momentan durch das NA gespeichert werden, durch die NA empfangen werden, Berichten, durch die NA, der DI über einen Träger, der zuerst eine Disponierungszusage erhält, nachdem die Logische-Kanal-Daten mit der höheren Priorität empfangen wurden.

7. Vorrichtung zum Auslösen eines Disponierungsinformations, DI-Berichts in einem Mehrträgersystem, die ein DI-Berichtsauslösemodul (601) und ein Zeitsteuerungsmodul (602) umfasst, wobei
das Zeitsteuerungsmodul (602) allen Trägern entspricht, die der Vorrichtung zugewiesen sind, wenn ein zustand eines der Träger einen zuvor konfigurierten Zustand erfüllt, das Zeitsteuerungsmodul dafür ausgelegt ist, die Zeitnahme zu starten oder neu zu starten, wenn das Zeitsteuerungsmodul abgelaufen ist, das Zeitsteuerungsmodul dafür ausgelegt ist, eine Auslöseinstruktion an das DI-Berichtsauslösemodul zu senden;
das DI-Berichtsauslösemodul (601) dafür ausgelegt ist, die Auslöseinstruktion zu empfangen und einen DI-Bericht auszulösen; und
**dadurch gekennzeichnet, dass**
das Zeitsteuerungsmodul (602) einen T-WAIT umfasst,
wenn eine Disponierungszusage, die momentan durch den einen der Träger empfangen wird, abgelaufen ist, der T-WAIT dafür ausgelegt ist, die Zeitnahme zu starten oder neu zu starten; und wenn der eine der Träger die Disponierungszusage erhält, wenn der T-WAIT läuft, der T-WAIT dafür ausgelegt ist, das Laufen zu beenden, und/oder dafür ausgelegt ist, zurückgesetzt zu werden.

8. Vorrichtung nach Anspruch 7, die des Weiteren ein DI-Berichtsmodul (603) umfasst; wobei
das DI-Berichtsmodul (603) dafür ausgelegt ist, gemäß dem Auslösen des DI-Berichtsauslösemoduls die DI über ein Enhanced Random Access-Verfahren zu berichten, das auf E-RUCCH-Ressourcen initiiert wurde, die für das NA konfiguriert wurden, nachdem der T-WAIT abgelaufen ist.

9. Vorrichtung nach Anspruch 7, wobei das Zeitsteuerungsmodul (602) des Weiteren einen T-DI umfasst,
wobei der T-DI dafür ausgelegt ist, die Zeitnahme zu starten oder neu zu starten, nachdem der eine der Träger die DI durch eine MAC-PDU berichtet hat.

10. Vorrichtung nach Anspruch 9, wobei die MAC-PDU eine MAC-e-PDU oder eine MAC-i-PDU umfasst.

11. Vorrichtung nach Anspruch 9, das des Weiteren ein DI-Berichtsmodul (603) umfasst; wobei
das DI-Berichtsmodul (603) dafür ausgelegt ist, gemäß dem Auslösen des DI-Berichtsauslösemoduls die DI über die MAC-PDU eines Trägers zu berichten, der zuerst eine Disponierungszusage erhält, nachdem der T-DI abgelaufen ist.

## Revendications

1. Procédé de déclenchement d'un rapport d'informations d'ordonnancement, SI, dans un système multi-porteuses, comprenant :
la configuration (301, 401) d'une minuterie dans un équipement d'utilisateur, UE, correspondant à toutes les porteuses affectées à l'UE, lorsqu'un état de l'une des porteuses satisfait à une condition préconfigurée, le démarrage ou le redémarrage (302, 402) de la minuterie, si la minuterie expire, le déclenchement (303, 403) d'un rapport SI ; et
**caractérisé en ce que** la minuterie comprend une minuterie d'attente, TWAIT ;
lorsque l'état de l'une des porteuses satisfait à la condition préconfigurée, le démarrage ou le redémarrage de la minuterie comprend :
si une autorisation d'ordonnancement actuellement obtenue par ladite une des porteuses expire, le démarrage ou le redémarrage du TWAIT ; et si ladite une des porteuses de l'UE obtient l'autorisation d'ordonnancement lorsque le TWAIT est en cours d'exécution, l'arrêt et/ou la réinitialisation du TWAIT.

2. Procédé selon la revendication 1, dans lequel le déclenchement d'un rapport SI comprend :
la notification du SI par l'intermédiaire d'une procédure d'accès aléatoire évoluée initiée sur des ressources E-RUCCH configurées pour l'UE après l'expiration du TWAIT.

3. Procédé selon la revendication 1, dans lequel la minuterie comprend en outre une minuterie de rapport SI, TSI ; lorsque l'état de l'une des porteuses satisfait à la condition préconfigurée, le démarrage ou le redémarrage de la minuterie comprend :
le démarrage ou le redémarrage du TSI après que ladite une des porteuses a notifié le SI par l'intermédiaire d'un MAC PDU.

4. Procédé selon la revendication 3, dans lequel le MAC PDU comprend un MAC-e PDU ou un MAC-i PDU.

5. Procédé selon la revendication 4, dans lequel le déclenchement d'un rapport SI comprend :
la notification, par l'UE, du SI par l'intermédiaire du MAC PDU d'une porteuse obtenant en premier une autorisation d'ordonnancement après l'expiration du TSI.

6. Procédé selon la revendication 1, comprenant en outre :
si des données de canal logique ayant une priorité supérieure à une priorité de données de canal logique actuellement stockées par l'UE sont reçues par l'UE, la notification, par l'UE, du SI par l'intermédiaire d'une porteuse obtenant en premier une autorisation d'ordonnancement après avoir reçu les données de canal logique avec la une priorité supérieure.

7. Appareil pour déclencher un rapport d'informations d'ordonnancement, SI, dans un système multi-porteuses, comprenant : un module de déclenchement de rapport SI (601) et un module de synchronisation (602), dans lequel le module de synchronisation (602) correspond à l'ensemble des porteuses affectées à l'appareil, lorsqu'un état de l'une des porteuses satisfait à une condition préconfigurée, le module de synchronisation est conçu pour démarrer ou redémarrer la minuterie, si le module de synchronisation arrive à expiration, le module de synchronisation est conçu pour envoyer une instruction de déclenchement au module de déclenchement de rapport SI ; le module de déclenchement de rapport SI (601) est conçu pour recevoir l'instruction de déclenchement, et déclencher un rapport SI ; et
**caractérisé en ce que**
le module de synchronisation (602) comprend un TWAIT,
si une autorisation d'ordonnancement actuellement obtenue par ladite une des porteuses expire, le TWAIT est conçu pour démarrer ou redémarrer la minuterie ; et si ladite une des porteuses obtient l'autorisation d'ordonnancement lorsque le TWAIT est en cours d'exécution, le TWAIT est conçu pour arrêter l'exécution et/ou est conçu pour être réinitialisé.

8. Appareil selon la revendication 7, comprenant en outre un module de rapport SI (603) ; dans lequel
le module de rapport SI (603) est conçu pour, en fonction du déclenchement du module de déclenchement de rapport SI, notifier le SI par l'intermédiaire d'une procédure d'accès aléatoire évoluée initiée sur des ressources E-RUCCH configurées pour l'UE après l'expiration du TWAIT.

9. Appareil selon la revendication 7, dans lequel le module de synchronisation (602) comprend en outre un TSI,
le STI étant conçu pour démarrer ou redémarrer la minuterie après que ladite une des porteuses a notifié le SI par l'intermédiaire d'un MAC PDU.

10. Appareil selon la revendication 9, dans lequel le MAC PDU comprend un MAC-e PDU ou un MAC-i PDU.

11. Appareil selon la revendication 9, comprenant en outre un module de rapport SI (603) ; dans lequel
le module de rapport S1 (603) est conçu pour, en fonction du déclenchement du module de déclenchement de rapport SI, notifier le SI par l'intermédiaire du MAC PDU d'une porteuse obtenant en premier une autorisation d'ordonnancement après l'expiration du TSI.
